Europäisches Patentamt

European Patent Office

Office européen des brevets

(11) Publication number: **0 274 244 B1**

# EUROPEAN PATENT SPECIFICATION

(45) Date of publication of patent specification: **18.03.92**    (51) Int. Cl.⁵: **D21F 1/00**, D21F 1/12, F16G 3/02

(21) Application number: **87310922.7**

(22) Date of filing: **11.12.87**

Divisional application 91104708.2 filed on 11/12/87.

(54) **Dryer fabric seaming.**

(30) Priority: **18.12.86 GB 8630243**

(43) Date of publication of application:
**13.07.88 Bulletin 88/28**

(45) Publication of the grant of the patent:
**18.03.92 Bulletin 92/12**

(84) Designated Contracting States:
**AT BE CH DE ES FR IT LI NL SE**

(56) References cited:
**EP-A- 0 118 406
EP-A- 0 196 686
FR-A- 2 469 599
GB-A- 1 085 889**

**RESEARCH DISCLOSURE, no. 217, May 1982, page 134, Havant Hampshire, GB; abstract no. 21710: "Zipper seam for paper machine dryer fabrics"**

(73) Proprietor: **SCAPA-PORRITT LIMITED
Cartmell Road
Blackburn Lancashire BB2 2SZ(GB)**

(72) Inventor: **Whitney, David P.
6 Hampshire Close§Wilpshire
Blackburn BB1 9LU Lancashire(GB)**
Inventor: **Brindle, Steven
"Dovedale" 56 Whalley Road Langho
Blackburn BB2 6EJ Lancashire(GB)**

(74) Representative: **Funge, Harry et al
M'CAW & CO. 41-51 Royal Exchange Cross Street
Manchester M2 7BD(GB)**

## Description

This invention relates to the joining together of the two ends of a papermaking dryer fabric to form an endless belt. Reference is made to Patent Application No. 91104708.2 divided from the present case.

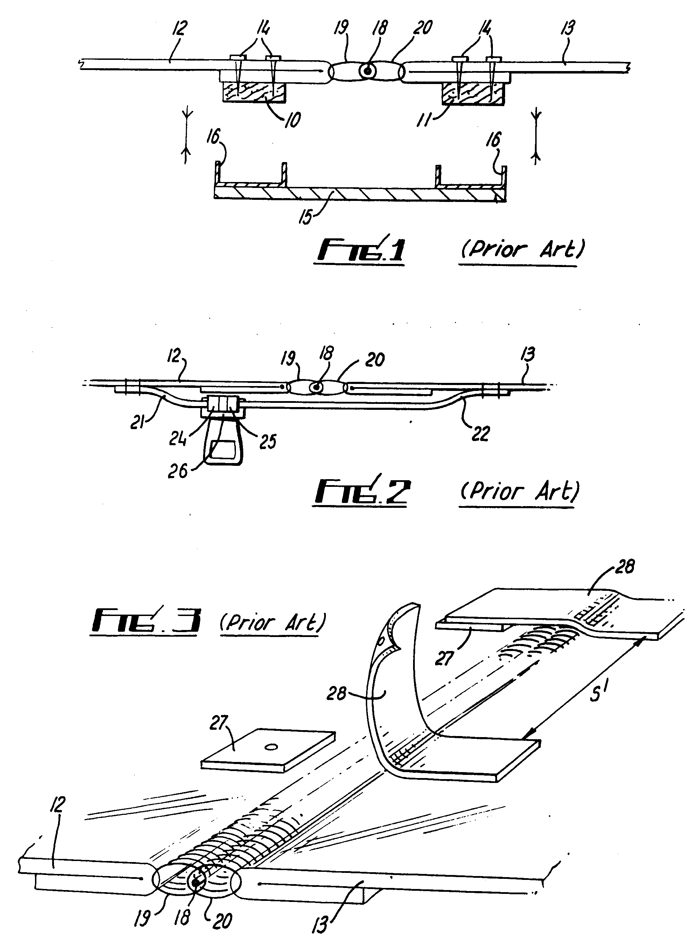

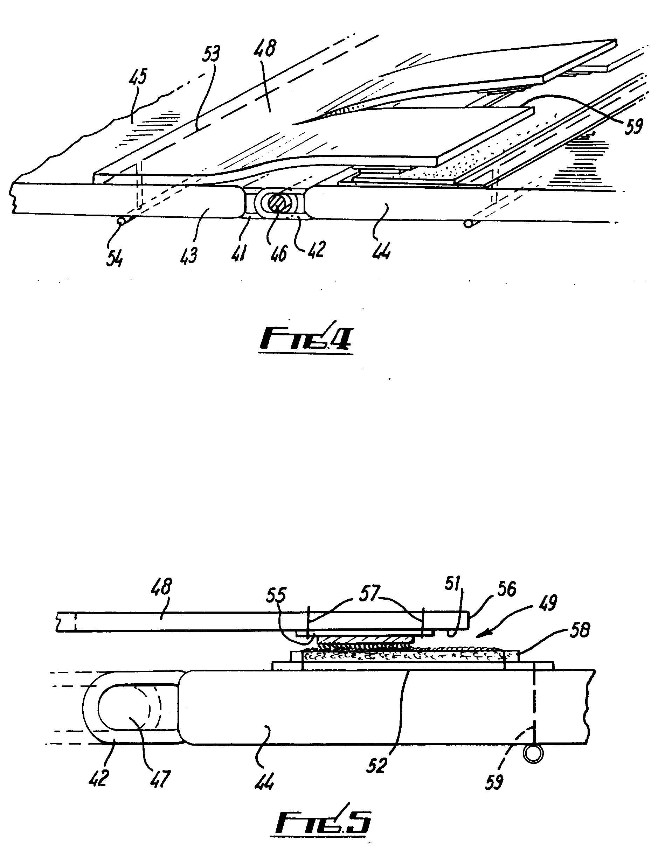

Such fabrics may be from two to ten metres wide and from fifteen to over a hundred metres long and the making of a satisfactory seam quickly and easily is essential for the efficient operation of a dryer. To allow the formation of a seam, the free ends of the web (Fig.1 or 2) are each provided with complementary interdigitating formations such as loops 19,20 and/or hooks which, when in engagement define a through passage through which a keeper such as a pintle wire 18 can be passed. Such a keeper formed joint has proved of great practical value because of its simplicity and flexibility. However, there is one major disadvantage in this type of joint. The ends of the web to be joined must be drawn towards each other carefully and the two rows of formations aligned accurately before the keeper can be inserted.

Many solutions have been proposed to this problem, but none is really satisfactory.

A first solution (Fig.1) involves attaching a pair of battens 10,11 to belt ends 12,13 by fasteners such as nails 14, and providing, at the joint positions, a rigid receiving structure 15 which includes a pair of accurately spaced and sized channels 16. When the battens 10, 11 engage in channel 16, loop formations 19, 20 are aligned and the pintle wire 18 can be passed along the tunnel mutually defined by the two sets of formations 19,20. This is fine in theory, but in practice, one batten is placed in its channel 16 and the other is then moved towards engagement. Because the battens 10, 11 extend rigidly across the entire belt width, such movement involves the application of tension to the entire belt width. Although belt tension is not unduly high, the width of the belt means that a considerable force needs to be exerted to draw the entire seam together simultaneously. Additionally, the fixed structure 15 is costly and must be placed in position on the machine before seaming and removed afterwards. The spacing of battens 10 and 11 from the formations 19, 20 is critical, any variation in this spacing resulting in lack of register between the sets of formations 19, 20 at positions along the seam, which lack of register cannot be readily and locally eliminated without considerable difficulty.

Further, once the members 10, 11 have been secured to the web ends, the face of the belt from which joining must be effected is determined. This can be a severe disadvantage, because, when a new belt is placed on a paper dryer, the exact position of the joint cannot be accurately determined. Even if a preferred face of the belt has been selected for making the seam, the seam may, after the new fabric has been loaded, be found to be too close to a dryer structure to enable seaming to be effected from the selected face. It would be ideal in this situation to make the seam from the other face. However, with the batten arrangement this is not possible, and so such a condition would, with the battens, require that the entire belt be inched to a position in which the seam is accessible from the selectable face. Such a procedure is time consuming and difficult in a dryer, which as large components of high inertia.

A second attempt to overcome the problem has been reasonably successful and this solution is shown in fig.2. Here the ends 12,13 of the web have attached to them respective strips 21,22 of a sliding clasp fastener whose stringers 24,25 can be united by slider 26. Strips 21,22 carrying stringers 24,25 extend beyond the edges of the belt. The construction and use of this temporary jointing means is shown in U.K.Patents Nos.1522801 and 1547122.

This solution again has the disadvantage that it is a "one-face" solution, union must be effected from that face of the belt remote from that to which the strips 21,22 are sewn. Additionally, once the sliding clasp fastener is closed, the seam is not necessarily closed. Even if the strips 21,22 are accurately sewn at a predetermined spacing from the formations 19,20 variations in belt length and tension, due to machine tolerances and belt construction tolerances, can lead to lack of alignment at positions along the seam. The fact that the fasteners completely cover the seam means that such irregularities cannot easily be seen and are only discovered when it is found that the threading of the printle wire will not proceed. In such a circumstance additional manual alignment must be effected at the "gap" or "gaps" left in the seam. The full length closed nature of the sliding clasp fastener does not allow an individual part of the seam to be adjusted without unfastening from one end or the other. To open from the end not yet threaded means loss of alignment. To open from the threaded end means that the belt ends pull apart and grip the pintle wire, preventing or hindering further threading.

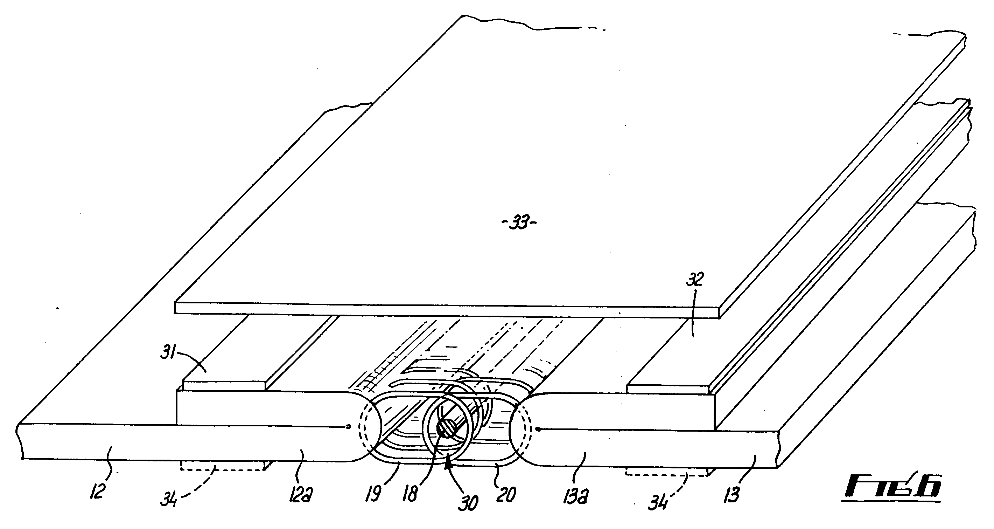

A still further attempt to solve the problems is shown in Fig. 3 and in 2244 Research disclosure No. 217 dated May 1982 page 134, abstract No. 21710. Here, small pads 27 of grip material (such as a hook or pile fastener) are secured to fabric ends 12 and straps 28 of complementary surface-grip material (such as a pile or hook fabric) are secured to fabric end 13. Straps 28 overhang the formation 20 and can be press-fitted to pads 27 to hold the formations 19,20 together whilst the printle wire 18 is threaded in. Such seam preclosure means is quite useful, but still has some serious problems. Firstly, because the straps 28 overhang the edge formations 20 of fabric end 13, there is danger that such overhanging straps become trapped between formations 20,19 on assembly and interfere with the uniting of the ends. Secondly, the arrangement is one-faced, in that it only allows seaming to be carried out from one face of the belt. Further, the straps and pads are spaced apart along the seam at such spacings 'S' that seam irregularities can arise between adjacent pairs of fasteners. If this does happen, the fasteners 27,28 simply cannot be adjusted to counteract any such misalignment. Another disadvantageous result of the spacing of the fastener pairs 27/28 is the fact that spacing imposes considerable loads on pads 27 and straps 28. This load is well within the surface-to-surface load range of the fasteners, but does require that the pads and straps be very securely attached, as by sewing, to ends 12.13. This means that removal of the fasteners after seaming, and before dryer operation, requires some time and effort.

A still further disadvantage of this known seaming arrangement is that the pads 27 and straps 28 are attached very close to formations 19, 20 which means that the tension application points are only just behind formations 19,20. This means that formations 19 and 20 cannot be so easily manoeuvred in directions at right angles to the belt plane. Interestingly, this is a step backwards compared with the structures of Figs. 1 and 2, both of which apply belt tension at positions spaced away from the fastening formations to leave a small band of belt along each belt end substantially free from tension, thus facilitating manipulation of formations 19, 20.

It is an object of the present invention to provide a dryer fabric seaming arrangement whereby some, at least, of the above discussed disadvantages are obviated or reduced.

The invention provides a flat woven papermakers' dryer fabric (45) having, at each fabric end (43,44) a respective row of interdigitating formations (41,42) capable of union by a pintle wire (46) to form a flexible joint and further including complementary parts of a temporary fastening means (49) adapted for cooperation, in a relative disposition of the fabric ends (43,44) consistent with engagement of the interdigitating formations (41,42) to maintain such interdigitation, characterised by a flap means (48) at one fabric end (43) the flap means (48) being dimensioned to overlie the opposed fabric end (44) and the complementary parts (55,58) of the temporary fastening means (49), in the aforesaid disposition of said ends (43,44) the complementary fastening means (55, 58) being provided on said flap means (48) and the opposed fabric end (44), respectively, in positions thereon for mutual cooperation, thus to hold the interdigitating formations (41,42) in engagement; characterised in that said flap means (48) is a single flap and extends substantially over the full lateral extent of the fabric (45); in that the complementary parts (55,58) of the fastening means are substantially co-extensive with the flap means (48) and therefore extend substantially over the full lateral extent of the fabric (45); and in that the complementary parts (55,58) of the temporary fastening means (49) are capable of selective separation to expose a section of the joint, leaving parts of the joint adjacent that section united by said temporary fastening means.

According to a preferred feature, the flap and the complementary part of the fastening provided thereon includes spaced slits extending from the free edge of said flap towards the line of attachment of said flap to the related fabric end.

The invention will now be described further, by way of example, with reference to the accompanying diagrammatic drawings, wherein:-

Fig. 1 is an end elevation showing a first prior known system for joining the two ends of a dryer fabric;

Fig. 2 is a similar view to that of Fig. 1 and shows a second known system;

Fig. 3 is a perspective view of a third known system;

Fig. 4 is a perspective view of a first preferred arrangement of the invention;

Fig. 5 shows a part of Fig. 4 drawn to a larger scale;

Fig. 6 is a perspective view of a second embodiment of the invention;

Figs. 7 and 8 are perspective sketch views showing use of the system of Fig.6

The prior art of Figs. 1 to 3 has been discussed in detail in the introductory paragraphs hereof, and will not be discussed further here.

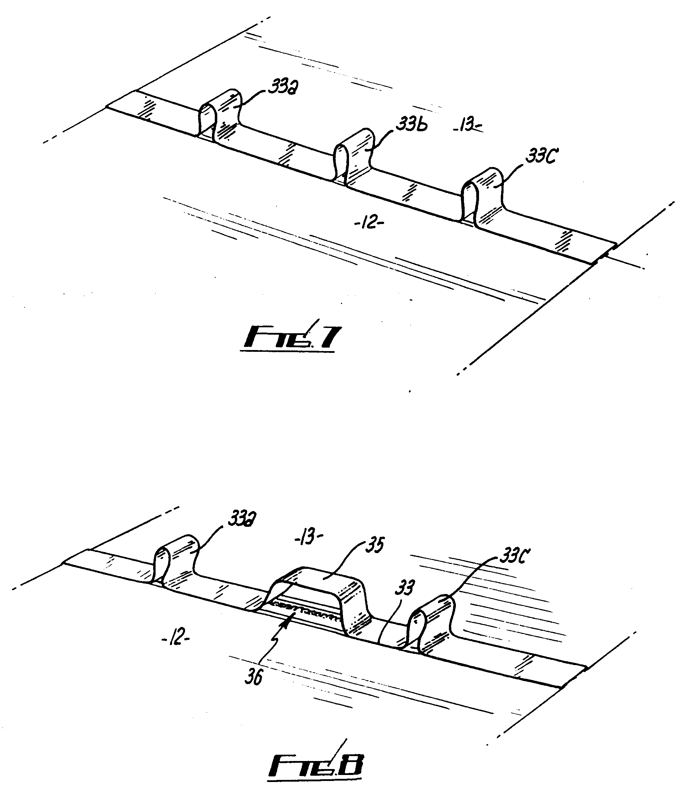

Thus, referring now to Figs. 4 and 5, the present invention proposes a temporary jointing means for use in facilitating the interdigitation of the loops 41, 42 provided at the respective ends 43, 44 of a papermachine dryer fabric 45 and the introduction of a pintle wire 46 into the tunnel 47 so formed comprising a flap 48 secured to end 43 of the ends to be joined to overlie the adjacent fabric end 44, there being complementary releasable fastening means 49 at the respective opposing faces 51, 52 of the flap 48 and the said adjacent fabric end 44. The flap 48, which flap is flexible extends throughout substantially the full width of the fabric end 43 to which it is secured, and is so dimensioned, in the longitudinal direction of the fabric, as materially to overlie the other fabric end. Attachment of the flap 48 to the fabric end 43 is by way of stitching 53 which passes through the flap and fabric and about a rod 54 at the back of the fabric such that, upon withdrawal of the rod 54, the stitching 53 will pull through the fabric and thereby allow ready separation of the flap therefrom.

The fastening means 49 comprise the respective parts of a hook/pile fastener of conventional form, for example that sold under the Trade Mark VELCRO, a "hook" tape 55 being secured to the flap 48 adjacent the free edge 56 thereof, as by stitching 57, and a wider strip of "pile" tape 58 being releasably secured to fabric end 44 by stitching 59 of like kind to that used releasably to secure the flap to fabric end 43.

In use of the temporary jointing means shown in Figs. 4 and 5, the flap 48 is sewn in position parallel to the free edge of fabric end 43 so as to extend materially beyond such edge, whilst the strip of "pile" tape 58 is attached to the other fabric end, the positions of the flap 48 and "pile" tape 58 on the respective fabric ends being such that, with the loops 41, 42 in interdigitated disposition, the "hook" and "pile" tapes 55, 58 are cooperable one with the other thus to hold the loops in interdigitated relationship. The pintle wire 46 is threaded through the tunnel 47 formed by the interdigitated loops, and the flap 48 and "pile" tape 58 are removed from the respective fabric ends to which they are respectively attached.

In order to provide a facility for localised seam adjustment or inspection in the event of difficulty in threading the pintle wire through the full axial extent of the tunnel formed by the interdigitated loops, the invention also contemplates the slitting of the flap from the free edge thereof towards that fabric end to which the flap is attached, such slitting being shown at 59 in Fig. 4 of the drawings. As well be appreciated, should it be required to inspect or adjust any localised area of the intended seam, the relevant section of the flap can be peeled back to expose such area, and any necessary remedial action can be taken without prejudice to the security of the temporary connection means in adjacent sections thereof.

In an alternative arrangement, see now Fig. 6, a flat woven dryer fabric is made endless in conventional manner by interdigitating loop formations 19, 20 each formed as continuous helices provided at the respective fabric ends and inserting a pintle wire into the tunnel formed by and between said formations. In order to facilitate interdigitation and pintle wire insertion each fabric end 12, 13 has secured thereto, parallel to but spaced a distance from formations 19, 20, strips 31, 32 of a material having an outer surface which defines a fastener surface capable of releasable attachment to a complementary fastener surface.

In combination with strips 31, 32 there is provided a band 33 of length equal to or greater than the length of the seam and just wider than the separation of strips 31, 32 in the interdigitated disposition of the loop formations. Band 33 is flexible sheet material and its free surface is a fastener surface complementary to the fastener surfaces of strips 31, 32.

Preferably, the fastener surfaces are hook and/or loop surfaces, the strips 31 and 32 and band 33 being respectively loop and hook fabric, although alternative forms of fastener surface may be provided.

By applying band 33 to a strip 31, 32 at one fabric end, that band then exists as a flap securely attached to the fabric end and which can be engaged with the strip existing at the other fabric end to hold the loop elements of the seam in engagement.

The arrangement of Fig. 6 can be supplemented with other face strips 34, to enable seaming to be effected from either face with equal ease.

Figs. 7 and 8 illustrate how the band 33 can be applied to unite the whole seam whilst leaving spaced upstanding loops 33a, b, c. If it happens that seam separation occurs beneath the band 33, a portion 35 can be lifted and access had to the relevant part of the seam without disturbing the rest of the temporary joint.

The invention is not limited to the precise details of the foregoing, and variations can be made thereto within the scope of the invention.

**Claims**

1.  A flat woven papermakers' dryer fabric (45) having, at each fabric end (43,44) a respective row of interdigitating formations (41,42) capable of union by a pintle wire (46) to form a flexible joint and further including complementary parts of a temporary fastening means (49) adapted for cooperation, in a relative disposition of the fabric ends (43,44) consistent with engagement of the interdigitating formations (41,42) to maintain such interdigitation, there being a flap means (48) at one fabric end (43) the flap means (48) being dimensioned to overlie the opposed fabric ends (44) and the complementary parts (55,58) of the temporary fastening means (49), in the aforesaid disposition of said ends (43,44) the complementary fastening means (55, 58) being provided on said flap means (48) and the opposed fabric end (44), respectively, in positions thereon for mutual cooperation, thus to hold the interdigitating formations (41,42) in engagement; characterised in that said flap means (48) is a single flap and extends substantially over the full lateral extent of the fabric (45); in that the complementary parts (55,58) of the fastening means are substantially co-extensive with the flap means (48) and therefore extend substantially over the full lateral extent of the fabric (45); and in that the complementary parts (55,58) of the temporary fastening means (49) are capable of selective separation to expose a section of the joint, leaving parts of the joint adjacent that section united by said temporary fastening means.

2. A papermakers' dryer fabric as claimed in claim 1, characterised in that the flap (48) and that complementary part (55) of the temporary fastening means (49) provided thereon both includes spaced slits extending from the free edge of said flap (48) towards a line of attachment of said flap (48) to the related fabric end (43).

3. A papermakers' dryer fabric as claimed in claim 1 or 2, characterised in that the said complementary parts (55,58) are releasably secured to the respective said fabric ends (43,44).

4. A papermakers' dryer fabric as claimed in claim 1, 2 or 3, chacterised in that the flap (48) is releasably secured to the related fabric end (43) by stitching around a rod (54) provided at that face of the fabric end (43) remote from the flap (48).

5. A papermakers' dryer fabric as claimed in any preceding claim, characterised in that the flap (48) carries said part (55)) of the complementary fastening means (49) adjacent and parallel to a free edge (56) therof.

6. A papermakers' dryer fabric as claimed in any of claims 1 to 4, characterised in that a band (33) comprising one part of the fastening means defines the flap.

7. A papermakers' dryer fabric as claimed in claim 6, whrein the said band (33) is secured to the related fabric end (12,13) by cooperation with a complementary part (31,32) itself releasably secured to the said fabric end (12,13).

**Revendications**

1. Drap sécheur (45) à tissage play pour machine à papier possédant, à chaque à chaque extrémité (43, 44) du drap, une rangée correspondante de formations (41, 42) s'imbriquant entre elles capables de s'unir au moyen d'un fil métallique en forme de broche (46) pour former une articulation flexible et comprenant additionnellement des éléments complémentaires de moyens de fixation temporaire (49) propres à coopérer dans une disposition relative des extrémités (43, 44) du drap concordant avec l'engagement des formations s'imbriquant (41, 42) pour préserver ladite imbrication, des moyens de rabat (48) se trouvant à une extrémité (43) du drap les moyens de rabat (48) étant dimensionnés pour recouvrir les extrémités opposées (44) du drap et les éléments complémentaires (55, 58) des moyens de fixation temporaire (49), dans la disposition susmentionnée desdites extrémités (43, 44), lesdits moyens de fixation complémentaires (55, 58) étant respectivement fixés sur lesdits moyens de rabat (48) et sur l'extrémité opposée (44) du drap, dans des positions de coopération mutuelle, maintenant ainsi engagées les formations s'imbriquant (41, 42), *caractérisé en ce que* lesdits moyens de rabat (48) sont un unique rabat qui recouvre sensiblement toute l'étendue transversale du drap (45); *en ce que* les éléments complémentaires (55, 58) des moyens de fixation sont sensiblement de même étendue que les moyens de rabat (48) et par conséquent recouvent sensiblement toute l'étendue transversale du drap (45); *et en ce que* les éléments complémentaires (55, 58) des moyens de fixations temporaire (49) sont aptes à être séparés sélectivement afin de mettre à nu une section de l'articulation, en laissant des parties de l'articulation adjacentes à cette section associées par lesdits moyens de fixation temporaire.

2. Drap sécheur à tissage plat pour machine à papier selon la revendication 1, *caractérisé en ce que* le rabat (48) et l'élément complémentaire (55) des moyens de fixation temporaire (49) qui y est fixé présentent tous les deux des fentes espacées partant du bord libre dudit rabat (48) vers une ligne de fixation dudit rabat (48)à l'extrémité connexe (43) du drap.

3. Drap sécheur à tissage plat pour machine à papier selon la revendication 1 ou 2, *caractérisé en ce que* les éléments complémentaires (55, 58) sont fixés de manière libérable aux dites extrémités respectives (43, 44) du drap.

4. Drap sécheur à tissage plat pour machine à papier selon la revendication 1, 2 ou 3, *caractérisé en ce que* le rabat (48) est fixé de manière libérable à l'extrémité corrspondante (43) du drap par brochage autour d'une tringle (54) située la face de l'extrémité (43) du drap isolée du rabat (48).

5. Drap sécheur à tissage plat pour machine à papier selon l'une quelconque des revendications précédentes, *caractérisé en ce que* le rabat (48) reçoit ledit élément (55) des moyens de fixation complémentaires (49) de manière adjacente et parallèle à un rebord libre (56) du rabat.

6. Drap sécheur à tissage plat pour machine à papier selon l'une quelconque des revendications 1 à 4, *caractérisé en ce que*'une bande (33) comprenant une partie des moyens de fixation définit le rabat.

7. Drap sécheur à tissage plat pour machine à papier selon la revendication 6, dans lequel ladite bande (33) est fixée à l'extrémité connexe (12, 13) du drap par coopération avec un élément complémentaire (31, 32) lui-même fixé de manière libérable à ladite extrémité (12, 13) du drap.

**Patentansprüche**

1. Flachgewebter Papiermaschinen-Trocknerfilz (45) mit jeweils einer an jedem Gewebeende vorgesehenen Reihe von ineinandergreifenden Formteilen (41, 42), die zur Herstellung einer flexiblen Verbindung durch einen Scharnierdraht (46) zu verbinden sind, und mit einer temporär benutzten Schließvorrichtung (49) mit zusammengehörigen Teilen, die in einer relativen Position der Gewebeenden (43, 44), welche dem Eingriff der ineinandergreifenden Formteile (41, 42) entspricht, zur Aufrechterhaltung dieses Ineinandergreifens zusammenwirken, sowie mit einer an einem Gewebeende (43) befindlichen Lappenanordnung (48), die zur Überdeckung des gegenüberliegenden Gewebeendes (44) und der zusammengehörigen Teile (55, 58) der temporären Schließvorrichtung (49) dimensioniert ist, wobei die zusammengehörigen Befestigungsteile (55, 58) an der Lappenanordnung (48) bzw. an dem gegenüberliegenden Gewebeende (44) in Positionen zum Zusammenwirken vorgesehen sind, um die ineinandergreifenden Formteile (41, 42) in Eingriff zu halten, dadurch gekennzeichnet, daß die Lappenanordnung (48) ein einziger Lappen ist und sich im wesentlichen über die ganze Breite des Gewebes (45) erstreckt, daß die zusammengehörigen Teile (55, 58) der Schließvorrichtung im wesentlichen gleiche Erstreckung haben wie die Lappenanordnung (48) und sich dementsprechend im wesentlichen über die gesamte Breite des Gewebes (45) erstrecken, und daß die zusammengehörigen Teile (55, 58) der temporären Schließvorrichtung zum Freilegen eines Teilabschnittes der Verbindung selektiv trennbar sind, wobei die diesem Teilabschnitt benachbarten Teile der Verbindung von der temporären Schließvorrichtung in der Verbindungsposition gehalten bleiben.

2. Papiermaschinen-Trocknerfilz nach Anspruch 1,
dadurch gekennzeichnet, daß der Lappen (48) und der an ihm vorgesehene Teil (55) der temporären Schließvorrichtung (49) Schlitze aufweisen, die mit Abstand voneinander vorgesehen sind und sich von dem freien Ende des Lappens (48) aus in Richtung auf eine Linie erstrecken, längs der der Lappen (48) an dem betreffenden Gewebeende (43) angebracht ist.

3. Papiermaschinen-Trocknerfilz nach Anspruch 1 oder 2,
dadurch gekennzeichnet, daß die zusammengehörigen Teile (55, 58) an den zugehörigen Gewebeenden (43, 44) jeweils lösbar befestigt sind.

4. Papiermaschinen-Trocknerfilz nach Anspruch 1, 2 der 3,
dadurch gekennzeichnet, daß der Lappen (48) an dem betreffenden Gewebeende (43) durch Umnähen eines Stabes (54), der an der von dem Lappen (48) abgewandten Gewebeseite angeordnet ist, lösbar befestigt ist.

5. Papiermaschinen-Trocknerfilz nach einem der vorhergehenden Ansprüche,
dadurch gekennzeichnet, daß der Lappen (48) den genannten Teil (55) der Schließvorrichtung (49) nahe und parallel zu seiner freien Kante (56) trägt.

6. Papiermaschinen-Trocknerfilz nach einem der Ansprüche 1 bis 4,
dadurch gekennzeichnet, daß der Lappen aus einem Band (33) besteht, das den einen Teil der Schließvorrichtung aufweist.

7. Papiermaschinen-Trocknerfilz nach Anspruch 6,
dadurch gekennzeichnet, daß das Band (33) an dem betreffenden Gewebeende (12, 13) durch Zusammenwirken mit einem komplementären Teil (31,32) befestigt ist, der seinerseits an dem Gewebeende (12, 13) lösbar befestigt ist.

**FIG.1** (Prior Art)

**FIG.2** (Prior Art)

**FIG.3** (Prior Art)

FIG.4

FIG.5

FIG.6

33a

33b

-13-

33C

-12-

FIG.7

33a

-13-

35

33C

33

-12-

36

FIG.8